(19) Europäisches Patentamt
European Patent Office
Office européen des brevets

(11) EP 0 884 336 B1

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(51) Int Cl.$^7$: **C08G 18/08**, C08G 18/48

(21) Anmeldenummer: **98109632.4**

(22) Anmeldetag: **27.05.1998**

(54) **Wässerige Polyurethandispersionen aus Polypropylenglykol mit geringem Harnstoffgehalt**

Aqueous polyurethane dispersions from polypropylene glycol having low urea content

Dispersions aqueuses de polyuréthane à base de polypropylène glycol à contenu faible d'urée

(84) Benannte Vertragsstaaten:
**DE ES FR GB IT**

(30) Priorität: **14.06.1997 DE 19725297**

(43) Veröffentlichungstag der Anmeldung:
**16.12.1998 Patentblatt 1998/51**

(73) Patentinhaber: **BASF AKTIENGESELLSCHAFT
67056 Ludwigshafen (DE)**

(72) Erfinder:
- **Häberle, Karl, Dr.
67346 Speyer (DE)**
- **Schumacher, Karl-Heinz, Dr.
67433 Neustadt (DE)**
- **Fricke, Hans-Joachim
67246 Dirmstein (DE)**

(56) Entgegenhaltungen:
**EP-A- 0 615 988** **EP-A- 0 619 111**
**EP-A- 0 741 152** **US-A- 5 576 382**

- **DATABASE WPI Section Ch, Week 9026 Derwent Publications Ltd., London, GB; Class A18, AN 90-196127 XP002072286 & JP 02 127 491 A (DAIICHI KOGYO SEIYAKU CO LTD)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft wässerige Dispersionen, enthaltend ein Polyurethan mit einem Gehalt an Harnstoffgruppen von maximal 110 mmol/kg Feststoffgehalt, aufgebaut aus

a) Diisocyanaten mit 4 bis 30 C-Atomen,

b) Polypropylenglykol mit einem Molekulargewicht von 1000 bis 8000 mit der Maßgabe, daß, wenn das Molekulargewicht zwischen 1000 und 2000 liegt, die arithmetisch mittlere Hydroxylgruppen-Funktionalität von 1,99 bis 2,00 beträgt, wenn das Molekulargewicht zwischen 2000 und 3000 liegt, die arithmetisch mittlere Hydroxylgruppen-Funktionalität von 1,97 bis 2,00 beträgt, wenn das Molekulargewicht zwischen 3000 und 4000 liegt, die arithmetisch mittlere Hydroxylgruppen-Funktionalität von 1,90 bis 2,00 beträgt und wenn das Molekulargewicht zwischen 4000 und 8000 liegt, die arithmetisch mittlere Hydroxylgruppen-Funktionalität von 1,80 bis 2,00, beträgt

c) gegebenenfalls von dem Polypropylenglykol (b) verschiedenen Diolen, die

c1) ein Molekulargewicht von 500 bis 5000 aufweisen und/oder

c2) ein Molekulargewicht von 60 bis 500 g/mol aufweisen,

d) von den Monomeren (a) bis (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppe oder eine potentiell hydrophile Gruppe tragen, wodurch die Wasserdispergierbarkeit der Polyurethane bewirkt wird,

e) gegebenenfalls weiteren von den Monomeren (a) bis (d) verschiedenen mehrwertigen Verbindungen mit reaktiven Gruppen, bei denen es sich um alkoholische Hydroxylgruppen oder Isocyanatgruppen handelt und

f) gegebenenfalls von den Monomeren (a) bis (e) verschiedenen einwertigen Verbindungen mit einer reaktiven Gruppe, bei der es sich um eine alkoholische Hydroxylgruppe oder eine Isocyanatgruppe handelt.

Wässerige Polyurethandispersionen mit geringem Harnstoffgehalt, die unter Mitverwendung von Polypropylenglykol hergestellt wurden, sind beispielsweise aus EP-A-615 988 bekannt. Es wird empfohlen, diese Verbindungen zum Verkleben von Folien, d.h. zur Herstellung von Verbundfolien zu verwenden. Als Aufbaukomponenten sind zweiwertige Polyetheralkohole genannt. Nach der Lehre dieser Druckschrift erhält man die Polyetheralkohole, indem man die entsprechenden Monomere, die dort in Form einer Liste, die u.a. auch Propylenoxid enthält, zusammengestellt sind, durch basisch katalysierte Anlagerung dieser Verbindungen an Starterverbindungen wie Amine oder Alkohole polymerisiert.

Es gehört jedoch zum Allgemeinwissen eines Polymerfachmannes, daß die Polymerisierung von Propylenoxid unter diesen Bedingungen nicht zu streng difunktionellen Verbindungen führt, sondern zu Polymermischungen, die in Abhängigkeit vom Molgewicht sowohl Polymere mit 2 alkoholischen Hydroxylgruppen als auch Verbindungen mit nur einer alkoholischen Hydroxylgruppe enthalten. Der Grund hierfür ist darin zu sehen, daß es unter der üblichen alkalischen Katalyse zu einer Umlagerung von PO zu Allylalkohol, der dann als monofunktioneller Starter fungiert, kommt. Dieses Allgemeinwissen ist beispielsweise in der Monographie Kunststoffhandbuch, Band 7 Polyurethane, 3. Aufl., S. 61 wiedergegeben.

Eine genaue Untersuchung hierzu findet sich in der Publikation "A New Generation of Polyether Polyols for The Urethane Industry" von S.D. Seneker und N. Barksby, vorgestellt auf der UTECH '96 in Den Haag, Niederlande, März, 1996 (UTECH'96 Conf. Book, Pap. (1996), Paper 46; Editors: Reed, David; Lee, Carole. Publisher: Crain Communications, London, UK). Danach hat auf die konventionelle Weise hergestelltes Polypropylenglykol mit einem Molekulargewicht von 1000 (Hydroxylzahl = 112) eine mittlere Hydroxylfunktionalität von ca 1,97 und solches mit einem Molekulargewicht von 2000 (Hydroxylzahl = 56) eine von ca. 1,93.

Der Fachmann würde nach dieser Lehre nicht ernsthaft in Betracht ziehen, für die Herstellung von Polyurethandispersionen gemäß der EP-A-615 988 ein tatsächlich streng difunktionelles Polypropylenglykol einzusetzen, sondern die handelsüblichen nach der dort beschriebenen Methode hergestellten, die eine deutlich niedrigere mittlere Funktionalität aufweisen. Zum Zeitpunkt der Einreichung der prioritätsbegründenden Anmeldung zu der EP-A-615 988 haben nämlich die streng difunktionellen Polypropylenglykole noch nicht in Mengen bereitgestellt werden können, wie für die Herstellung von Polyurethandispersionen im industriellen Maßstab benötigt worden wären.

Aus der EP-A-741 152 sind Polyurethandispersionen bekannt, die aus Polypropylenglykol hergestellt sind. Das dabei verwendete Polypropylenglykol weist einen Gehalt an ungesättigten Gruppen von 0,020 meq/g oder weniger auf. Es wird darauf hingewiesen, daß solche Polypropylenglykole eine Hydroxylgruppen-Funktionalität aufweisen, die nur wenig von 2,0 abweicht. Bei dem bevorzugten Verfahren zur Herstellung der Polyurethane wird zunächst ein Präpolymer mit NCO-Endgruppen erzeugt, das nach der Dispergierung

in Wasser mit Glykolen oder bevorzugt Aminen kettenverlängert wird. Bei dieser Vorgehensweise erhält man in jedem der beiden genannten Fälle zwangsläufig Polyurethane mit vergleichsweise hohem Harnstoffgehalt, denn im Falle der Kettenverlängerung mit Diolen ist dies auf die Verseifungsreaktion der Isocyanatgruppen mit Wasser zurückzuführen, was nach der Gleichung

$$2\ RNCO + H_2O \Longrightarrow R\text{-}NH\text{-}CO\text{-}NHR + CO_2$$

zur Bildung von Harnstoff führt. Diese Konkurrenzreaktion läuft mit einer Geschwindigkeit ab, die mit der der Urethanbildung vergleichbar ist.

Die Dispersionen des Standes der Technik weisen bereits ein gutes Eigenschaftsprofil als Folienklebstoffe auf, insbesondere, wenn polare Materialien miteinander verklebt werden sollen. Bei unpolaren Substraten wie Polyolefinen erscheinen die Verbundfestigkeiten jedoch noch verbesserungsbedürftig. Bei den Folienherstellern besteht insbesondere deshalb ein Bedarf an wässerigen Klebstoffdispersionen, die Polyolefinfolien fest mit einer oder mehreren anderen Folien verbinden können, da Verbundfolien, die zumindest teilweise aus Polyolefinen aufgebaut sind, eine besondere Marktbedeutung haben.

Die Aufgabe der vorliegenden Erfindung bestand deshalb darin, wässerige Klebstoffdispersionen bereitzustellen, mit denen sich Verbundfolien, die zumindest teilweise aus Polyolefinen aufgebaut sind, herstellen lassen, die eine besonders hohe Verbundfestigkeit aufweisen.

Demgemäß wurden die eingangs definierten Polyurethandispersionen, Verfahren zu deren Herstellung und Verbundfolien, die unter Verwendung der Polyurethandispersionen hergestellt wurden, gefunden.

Als Monomere (a) kommen die üblicherweise in der Polyurethanchemie eingesetzten Diisocyanate in Betracht.

Insbesondere zu nennen sind Diisocyanate X $(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanatodiphenylmethan, p-Xylylendiisocyanat, Tetramethylxylylendiisocyanat (TMXDI), die Isomeren des Bis-(4-isocyanatocyclohexyl)methan wie das trans/trans-, das cis/cis- und das cis/trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a) kann man auch Isocyanate einsetzen, die neben den freien Isocyanatgruppen weitere verkappte Isocyanatgruppen, z.B. Uretdion- oder Carbodiimidgruppen tragen.

Die Polypropylenglykole (b) weisen bevorzugt eine arithmetisch mittlere Hydroxylgruppen-Funktionalität von 1,97 bis 2,00 auf. Derartige Polypropylenglykole sind allgemein bekannt. Ihre Herstellung gelingt besonders einfach mit Hilfe von Komplexen des Zink-Hexacyanokobaltats und ist beispielsweise in der DE-A-0 654 302 und der US 5 158 922 beschrieben.

Im Hinblick auf gute Filmbildung und Elastizität kommen als Diole (c), die von Komponente (b) verschieden sind, vornehmlich höhermolekulare Diole (c1), in Betracht, die ein Molekulargewicht von etwa 500 bis 5000, vorzugsweise von etwa 1000 bis 3000 g/mol haben.

Bei den Diolen (c1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC\text{-}(CH_2)_y\text{-}COOH$, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel $HO-(CH_2)_z-COOH$ ableiten, wobei z eine Zahl von 1 bis 20 ist. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (c1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 500 bis 5000, und vor allem 500 bis 4500. Die Verwendung solcher Polypropylenglykole ist jedoch nicht bevorzugt.

Als Monomere (c1) können auch Polypropylenglykole, die von den Polypropylenglykolen, die als Komponente (b) in Betracht kommen, verschieden sind, eingesetzt werden. Diese Polypropylenglykole (c1) weisen entweder ein Molekulargewicht von weniger als 1000 g mol auf oder, falls das Molekulargewicht zwischen 1000 und 5000 liegt, weist dieses Polypropylenglykol eine arithmetisch mittlere Hydroxylgruppen-Funktionalität von unter 1,95 auf.

Ebenfalls geeignet sind Polyhydroxyolefine, bevorzugt solche mit 2 endständigen Hydroxylgruppen, z.B. α-ω -Dihydroxypolybutadien, α-ω-Dihydroxypolymethacrylester oder α-ω-Dihydroxypolyacrylester als Monomere (c1). Solche Verbindungen sind beispielsweise aus der EP-A-0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane läßt sich erhöhen, wenn als Diole (c) neben den Diolen (c1) noch niedermolekulare Diole (c2) mit einem Molekulargewicht von etwa 62 bis 500, vorzugsweise von 62 bis 200 g/mol, eingesetzt werden. Als Monomere (c2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol bevorzugt werden.

Das molare Verhältnis der Menge der Diole (c2) zu der Summe aus der Menge an Polypropylenglykolen (b) und den Diolen (c1) beträgt bevorzugt 0,1 : 1 bis 5 :1, besonders bevorzugt 0,1 : 1 bis 2 : 1, ganz besonders bevorzugt werden keine Diole (c2) mitverwendet.

Der molare Anteil der Diole (c1), bezogen auf das Polypropylenglykol (b), beträgt im allgemeinen maximal 50, bevorzugt jedoch weniger als 20, besonders bevorzugt 0 mol-%.

Um die Wasserdispergierbarkeit der Polyurethane zu erreichen, sind die Polyurethane neben den Komponenten (a), (b), (c) und (e) aus von den Komponenten (a), (b) (c) und (e) verschiedenen Monomere (d), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) (e) und (f) wird im allgemeinen so bemessen, daß die Molmenge der (potentiell) hydrophilen Gruppen, bezogen auf die Gewichtsmenge aller Monomere (a) bis (f), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (f).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (d) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (d) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyldialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden, z.B. Bromiden oder Chloriden in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 4 bis 10 Kohlenstoffatomen, wie sie auch in der US-A 3 412 054 beschrieben sind. Insbesondere sind Verbindungen der allgemeinen Formel

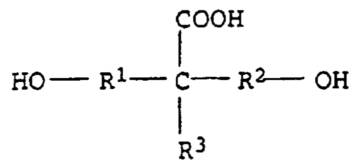

in welcher $R^1$ und $R^2$ für eine $C_1$- bis $C_4$-Alkandiyl-Einheit und $R^3$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (c2) sowie die Diole (c1) geeignet.

Als Monomere (d) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α, β-ungesättigte Carbonsäuren wie die N-(2-Aminoethyl)-2-aminoethancarbonsäure sowie die entsprechenden N-Aminoalkyl-aminoalkancarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die sauren Gruppen in Form ihrer Salze mit einem Alkaliion oder einem Ammoniumion als Gegenion vor.

Monomere (d) mit gegenüber Isocyanat reaktiven Aminogruppen werden nur in solchen Mengen eingesetzt, daß der daraus resultierende Harnstoffgehalt 110 mmol/kg nicht überschreitet.

Die Monomere (e), die von den Monomeren (a) bis (d) verschieden sind, dienen im allgemeinen der Vernetzung oder der Kettenverlängerung. Es sind im allgemeinen mehr als zweiwertige nichtphenolische Alkohole.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (e) höher als zweiwertige Isocyanate eingesetzt werden. Handelsübliche Verbindungen sind beispielsweise das Isocyanurat oder das Biuret des Hexamethylendiisocyanats.

Monomere (f), die gegebenenfalls mitverwendet werden, sind Monoisocyanate und Monoalkohole. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-$\alpha,\alpha$-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a) bis (f) sowie ihre jeweiligen Molmengen so gewählt, daß das Verhältnis A : B mit

A) der Molmenge an Isocyanatgruppen und

B) der Summe aus der Molmenge der Hydroxylgruppen und der Molmenge der funktionellen Gruppen, die mit Isocyanaten in einer Additionsreaktion reagieren können

0,5: 1 bis 1,08 : 1, bevorzugt 0,8 : 1 bis 1,08 : 1, besonders bevorzugt 0,8 : 1 bis 1 : 1 beträgt. Ganz besonders bevorzugt liegt das Verhältnis A B möglichst nahe an 1 : 1.

Der Gehalt der Polyurethane an Harnstoffgruppen beträgt maximal 110 mmol/kg, bevorzugt weniger als 60 mmol/kg.

Damit die Polyurethane oder deren Präpolymere nicht durch Reaktion mit Wasser Polyurethane mit einem höheren Harnstoffgruppengehalt zu bilden vermögen, ist es zu vermeiden, daß die Polyurethane oder deren Präpolymere vor der Dispergierung in Wasser einen höheren NCO-Gehalt als 220 mmol /kg Feststoffgehalt aufweisen.

Aus dem gleichen Grund werden bei der Herstellung der Polyurethane auch bevorzugt keine Monomere mit primären oder sekundären Aminogruppen eingesetzt. Falls aus irgend einem Grund auf den Einsatz nicht verzichtet werden soll, so ist darauf zu achten, das deren Menge so begrenzt wird, daß der Harnstoffgehalt die angegebenen Grenzwerte nicht überschreitet.

Die eingesetzten Monomere (a) bis (f) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (f) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrekken. Es ist auf dem Gebiet der Polyurethanchemie bekannt, wie die Reaktionszeit durch eine Vielzahl von Parametern wie Temperatur, Konzentration der Monomere, Reaktivität der Monomere beeinflußt wird.

Zur Beschleunigung der Reaktion der Diisocyanate können die üblichen Katalysatoren wie Dibutylzinndilaurat, Zinn-II-octoat oder Diazabicyclo-(2,2,2)-octan mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach dem "Acetonverfahren" hergestellt. Hierbei wird in einem mit Wasser mischbaren und bei Normaldruck unter 100°C siedenden Lösungsmittel aus den Komponenten (a) bis (d) ein ionisches Polyurethan hergestellt. Es wird soviel Wasser zugegeben, bis sich eine Dispersion bildet, in der Wasser die kohärente Phase darstellt.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Die Dispersionen haben im allgemeinen einen Feststoffgehalt von 10 bis 65, bevorzugt von 15 bis 55 Gew.-% und eine Viskosität von 10 bis 500 m Pas (gemessen bei einer Temperatur von 20°C und einer Schergeschwindigkeit von 250 $s^{-1}$).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere, z.B. in den DE-A-3903538, 43 09 079 und 40 24 567 genannten Polymere, die in Polyurethandispersionen beispielsweise als Haftungsverbesserer dienen, können nach den in den oben genannten Schriften beschriebenen Methoden dem Polyurethan oder dem Präpolymeren bereits vor der Dispergierung zugesetzt werden.

Die Polyurethan-Dispersionen können handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Die erfindungsgemäßen Dispersionen eignen sich zur Beschichtung und Verklebung von Gegenständen unterschiedlichster Art. Sie eignen sich insbesondere zur Herstellung von Verbundfolien durch Verklebung von 2 oder mehr Folien, die aus unterschiedlichen Materialien bestehen, miteinander.

Die Folienmaterialien, die im wesentlichen eingesetzt werden, sind Polyethylen, Polypropylen, insbesondere biaxial gerecktes Polypropylen, Polyamid, Polyester, PVC, Celluloseacetat, Zellglas und Metalle wie Zinn und Aluminium.

Die Polymerfolien, insbesondere Polyolefinfolien, können gegebenenfalls coronavorbehandelt sein.

Die Herstellung der Verbundfolien erfolgt zweckmäßigerweise nach den allgemein bekannten Methoden. Dabei wird die Polyurethandispersion auf mindestens eine, im allgemeinen nur auf eine, der zu verklebenden Folien aufgetragen. Die beschichteten Folien werden im allgemeinen kurz getrocknet und dann vorzugsweise bei einer Temperatur von 30 bis 80°C miteinander bzw. mit unbeschichteten Substraten verpreßt.

Die erhaltene Verklebung, insbesondere der erhaltene Folienverbund hat bei Raumtemperatur eine hohe Verbundfestigkeit, wie sonst im allgemeinen nur bei zweikomponentigen Systemen unter Verwendung eines Vernetzers zu erreichen ist.

Bei hohen Temperaturen, ca. ab 60°C wird die Verbundfestigkeit geringer. Ab ca. 100°C, z.B. in kochendem Wasser, lassen sich die Verbunde im allgemeinen wieder gut trennen. Auf diese Weise wird ein getrenntes Recycling der unterschiedlichen Folien im Verbund ermöglicht.

Eine Erhöhung der Verbundfestigkeit auch bei hohen Temperaturen kann z.B. durch Zusatz von Vernetzern mit freien Isocyanatgruppen erreicht werden.

Beispiele

A. Herstellung der Polyurethandispersionen

Beispiel 1:

Eine Mischung aus 76,6 g (0,440 mol) Toluylendiisocyanat 80/20, 410,2 g (0,200 mol) eines Polypropylenglykols mit einer OH-Zahl von 54,7 und einem Gehalt an Ungesättigtheit von 0,005 mequ/g (Acclaim® 2200 der Fa. Arco) mit einer rechnerischen Funktionalität von 1,99, 32,2 g (0,240 mol) DMPA und 0,1 g DBTL wurde während 5 h bei 95°C umgesetzt. Anschließend wurde auf 30°C abgekühlt und der NCO-Gehalt des PUR zu 0,10 Gew.%, bezogen auf das PUR, bestimmt. Das Verhältnis von NCO-Gruppen zu NCO-reaki tiven Gruppen betrug 1. Der Gehalt an Harnstoffgruppen =N-CO-N= betrug 0,07 Gew.% (12 mmol Harnstoff/kg).

Danach wurde mit 450 g Aceton verdünnt und 16,2 g (0,16 mol) Triethylamin sowie 800 g Wasser eingerührt. Nach Destillation des Acetons wurde eine ca. 40 gew.%ige wäßrige PUD erhalten.

Vergleichsbeispiel 1 (nach der EP-A-615 998, Beisp. 1)

Eine Mischung aus 76,6 g (0,440 mol) Toluylendiisocyanat 80/20, 400 g (0,200 mol) eines Polypropylenglykols mit einer OH-Zahl von 56,0 und einem Gehalt an Ungesättigtheit von 0,035 mequ/g (bestimmt nach der Jodzahlmethode nach Wies; Lupranol® 1000 der Fa. BASF mit einer rechnerischen Funktionalität von 1,93), 32,2 g (0,240 mol) DMPA und 0,1 g DBTL wurde während 5 h bei 95°C umgesetzt. Anschließend wurde auf 30°C abgekühlt und der NCO-Gehalt des PUR zu 0,14 Gew.%, bezogen auf das PUR, bestimmt. Das Verhältnis von NCO-Gruppen zu NCO-reaktiven Gruppen betrug 1. Der Gehalt an Harnstoffgruppen =N-CO-N= betrug 0,09 Gew.% (16 mmol Harnstoff/kg).

Danach wurde mit 450 g Aceton verdünnt und 16,2 g (0,16 mol) Triethylamin sowie 800 g Wasser eingerührt. Nach Destillation des Acetons wurde eine ca. 40 gew.%ige wäßrige PUD erhalten.

Vergleichsbeispiel 2 (nach der EP 741 152)

Eine Mischung aus 42,1 g (0,242 mol) Toluylendiisocyanat 80/20, 205,1 g (0,100 mol) eines Polypropylenglykols mit einer OH-Zahl von 54,7 und einem Gehalt an Ungesättigtheit von 0,005 mequ/g (Acclaim 2200 der Fa. Arco), 16,1 g (0,120 mol) DMPA und 0,1 g DBTL wurde während 5 h bei 95°C umgesetzt. Anschließend wurde auf 30°C abgekühlt und der NCO-Gehalt des PUR zu 0,70 Gew.%, bezogen auf das PUR, bestimmt.

Das Verhältnis von NCO-Gruppen zu NCO-reaktiven Gruppen betrug = 1,1. Danach wurde mit 225 g Aceton verdünnt und 8,1 g (0,08 mol) Triethylamin sowie 360 g Wasser eingerührt. Hernach wurde eine Lösung von 1,3 g (0,022 mol) Ethylendiamin eingerührt. Nach Destillation des Acetons wurde eine ca. 40 gew.%ige wäßrige PUD erhalten.
Harnstoffgehalt: 161 mmol Harnstoff/kg

B. Herstellung und Prüfung von Verbundfolien

Aus unterschiedlichen Polymerfolien und einer

Aluminiumfolie wurden Verbunde hergestellt und anschließend die Schälfestigkeit als Maß für die Verbundfestigkeit bestimmt.

Im einzelnen wurde auf die (im Falle der Polyolefine coronavorbehandelte) Seite der Folie die Polyurethandispersion in einer Menge von 4 g/$m^2$ mit einem 0,2 mm Rollrakel aufgetragen. Die beschichteten Folien wurden mit einem Heißluftgebläse ca. 2 Minuten getrocknet und in einer Rollenpresse bei 70°C und 6,5 bar mit einer Geschwindigkeit von 5 m/min mit einer weiteren Folie verpreßt.

Nach einer Lagerung von 7 Tagen bei Raumtemperatur wurde die Schälfestigkeit in N/cm des Folienverbundes mit einer Zugprüfmaschine geprüft. Die Prüfergebnisse können der Tabelle 1 entnommen werden.

Tabelle 1

| Schälfestigkeiten in N/cm | | |
|---|---|---|
| | PP/PE | PP/metall. PET |
| | | |
| Beispiel | 3,1 | 2,2 |
| Vergleichsbeisp. 1 | 1,9 | 1,5 |
| Vergleichsbeisp. 2 | 1,1 | 1,3 |
| | | |

Abkürzungen:

| | |
|---|---|
| PP | Polypropylenfolie |
| PE | Polyethylenfolie |
| metall.PET | Polyethylenterephthalatfolie |
| PUD | Polyurethandispersion |

**Patentansprüche**

1. Wässerige Dispersionen, enthaltend ein Polyurethan mit einem Gehalt an Harnstoffgruppen von maximal 110 mmol/kg Feststoffgehalt, aufgebaut aus

    a) Diisocyanaten mit 4 bis 30 C-Atomen,

    b) Polypropylenglykol mit einem Molekulargewicht von 1000 bis 8000 mit der Maßgabe, daß, wenn das Molekulargewicht zwischen 1000 und 2000 liegt, die arithmetisch mittlere Hydroxylgruppen-Funktionalität von 1,99 bis 2,00 beträgt, wenn das Molekulargewicht zwischen 2000 und 3000 liegt, die arithmetisch mittlere Hydroxylgruppen-Funktionalität von 1,97 bis 2,00 beträgt, wenn das Molekulargewicht zwischen 3000 und 4000 liegt, die arithmetisch mittlere Hydroxylgruppen-Funktionalität von 1,90 bis 2,00 beträgt, und wenn das Molekulargewicht zwischen 4000 und 8000 liegt, die arithmetisch mittlere Hydroxylgruppen-Funktionalität von 1,80 bis 2,00 beträgt

    c) gegebenenfalls von dem Polypropylenglykol (b) verschiedenen Diolen, die

        c1) ein Molekulargewicht von 500 bis 5000 aufweisen und/oder

        c2) ein Molekulargewicht von 60 bis 500 g/mol aufweisen,

    d) von den Monomeren (a) bis (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppe oder eine potentiell hydrophile Gruppe tragen, wodurch die Wasserdispergierbarkeit der Polyurethane bewirkt wird,

    e) gegebenenfalls weiteren von den Monomeren (a) bis (d) verschiedenen mehrwertigen Verbindungen mit reaktiven Gruppen, bei denen es sich um alkoholische Hydroxylgruppen oder Isocyanatgruppen handelt und

    f) gegebenenfalls von den Monomeren (a) bis (e) verschiedenen einwertigen Verbindungen mit einer reaktiven Gruppe, bei der es sich um eine alkoholische Hydroxylgruppe oder eine Isocyanatgruppe handelt.

2. Wässerige Dispersionen nach Anspruch 1, wobei die molare Menge an den Diolen (c1), bezogen auf die Menge an Polypropylenglykol (b) 0 bis 50 mol-% beträgt.

3. Wässerige Dispersionen nach Anspruch 1 oder 2, wobei das Polyurethan aus Dimethylolpropionsäure als Komponente (d) aufgebaut ist.

4. Wässerige Dispersionen nach den Ansprüchen 1 bis 3, wobei das Polyurethan aus Toluylendiisocyanat, Isophorondiisocyanat, 4,4'-Dicyclohexylmethandiisocyanat oder Hexamethylendiisocyanat als Komponente (a) aufgebaut ist.

5. Verfahren zur Herstellung von Verbundfolien, **dadurch gekennzeichnet, daß** man eine Dispersion gemäß den Ansprüchen 1 bis 4 auf eine Kunststoff- oder Metallfolie aufträgt und mit einer oder mehreren Kunststoff- und/oder Metallfolien zu einer Verbundfolie verklebt.

6. Verfahren zur Herstellung von Verbundfolien nach

Anspruch 5, **dadurch gekennzeichnet, daß** man eine Dispersion gemäß den Ansprüchen 1 bis 4 auf eine Kunststoff- oder Metallfolie aufträgt und mit einer oder mehreren Kunststoff- und/oder Metallfolien zu einer Verbundfolie verklebt, wobei eine der Folien eine Polyolefinfolie ist.

**7.** Verbundfolien, erhältlich nach dem Verfahren gemäß Anspruch 5 oder 6.

## Claims

**1.** An aqueous dispersion comprising a polyurethane having a content of urea groups of not more than 110 mmol/kg of solids, produced from

a) diisocyanates having from 4 to 30 carbon atoms,

b) polypropylene glycol having a molecular weight of from 1 000 to 8 000, with the proviso that, when the molecular weight is in the range from 1 000 to 2 000, the arithmetic mean hydroxyl group functionality is from 1.99 to 2.00, when the molecular weight is in the range from 2 000 to 3 000, the arithmetic mean hydroxyl group functionality is from 1.97 to 2.00, when the molecular weight is in the range from 3 000 to 4 000, the arithmetic mean hydroxyl group functionality is from 1.90 to 2.00, and when the molecular weight is in the range from 4 000 to 8 000, the arithmetic mean hydroxyl group functionality is from 1.80 to 2.00,

c) if desired, diols which are different from the polypropylene glycol (b) and

c1) have a molecular weight of from 500 to 5 000 and/or
c2) have a molecular weight of from 60 to 500 g/mol,

d) monomers which are different from the monomers (a) to (c) and have at least one isocyanate group or at least one group which is reactive toward isocyanate groups and additionally bear at least one hydrophilic group or a potentially hydrophilic group by means of which the polyurethane is made dispersible in water,

e) if desired, further polyfunctional compounds which are different from the monomers (a) to (d) and have reactive groups which are alcoholic hydroxyl groups or isocyanate groups and

f) if desired, monofunctional compounds which are different from the monomers (a) to (e) and have a reactive group which is an alcoholic hydroxyl group or an isocyanate group.

**2.** An aqueous dispersion as claimed in claim 1, wherein the molar amount of the diols (c1) based on the amount of polypropylene glycol (b) is from 0 to 50 mol%.

**3.** An aqueous dispersion as claimed in claim 1 or 2, wherein the polyurethane is produced from dimethylolpropionic acid as component (d).

**4.** An aqueous dispersion as claimed in any of claims 1 to 3, wherein the polyurethane is produced from tolylene diisocyanate, isophorone diisocyanate, dicyclohexylmethane 4,4'-diisocyanate or hexamethylene diisocyanate as component (a).

**5.** A process for producing composite sheets, which comprises applying a dispersion as claimed in any of claims 1 to 4 to a plastic film or metal foil and adhesively bonding this to one or more plastic films and/or metal foils to produce a composite sheet.

**6.** A process for producing composite sheets as claimed in claim 5, wherein a dispersion as claimed in any of claims 1 to 4 is applied to a plastic film or metal foil and is adhesively bonded to one or more plastic films and/or metal foils to produce a composite sheet, with one of the films being a polyolefin film.

**7.** A composite sheet obtainable by a process as claimed in claim 5 or 6.

## Revendications

**1.** Dispersions aqueuses, contenant un polyuréthanne comportant une teneur en groupes urée d'au maximum 100 millimoles/kg de teneur en matière solide, constitué

a) de diisocyanates comportant 4 à 30 atomes de C,
b) de polypropylèneglycol présentant un poids moléculaire de 1000 à 8000 à la condition que, lorsque le poids moléculaire est situé entre 1000 et 2000, la fonctionnalité des groupes hydroxyle arithmétiquement moyenne est de 1,99 à 2,00, lorsque le poids moléculaire est situé entre 2000 et 3000, la fonctionnalité des groupes hydroxyle arithmétiquement moyenne est de 1,97 à 2,00, lorsque le poids moléculaire est situé entre 3000 et 4000, la fonctionnalité des groupes hydroxyle arithmétiquement moyenne est de 1,90 à 2,00, et lorsque le poids moléculaire est situé entre 4000 et 8000, la fonctionnalité des groupes hydroxyle arithmétiquement

moyenne est de 1,80 à 2,00,

c) éventuellement de diols différents du polypropylèneglycol (b) qui

c1) présentent un poids moléculaire de 500 à 5000 et/ou

c2) présentent un poids moléculaire de 60 à 500 g/mole,

d) de monomères différents des monomères (a) à (c) comportant au moins un groupe isocyanate ou au moins un groupe réactif vis-à-vis des groupes isocyanate, qui portent en outre au moins un groupe hydrophile ou un groupe potentiellement hydrophile, ce par quoi la capacité de dispersion dans l'eau des polyuréthannes est produite,

e) éventuellement d'autres composés plurivalents différents des monomères (a) à (d), comportant des groupes réactifs pour lesquels il s'agit de groupes hydroxyle alcooliques ou de groupes isocyanate, et

f) éventuellement de composés monovalents différents des monomères (a) à (e) comportant un groupe réactif pour lequel il s'agit d'un groupe hydroxyle alcoolique ou d'un groupe isocyanate.

**2.** Dispersions aqueuses suivant la revendication 1, dans lesquelles la quantité molaire de diols (c1) par rapport à la quantité de polypropylèneglycol (b) est de 0 à 50 moles %.

**3.** Dispersions aqueuses suivant l'une des revendications 1 et 2, dans lesquelles le polyuréthanne est constitué d'acide diméthylolpropionique comme composant (d).

**4.** Dispersions aqueuses suivant l'une des revendications 1 à 3, dans lesquelles le polyuréthanne est constitué de diisocyanate de toluylène, de diisocyanate d'isophorone, de diisocyanate de 4,4'-dicylohexylméthane ou de diisocyanate d'hexaméthylène, comme composant (a).

**5.** Procédé de préparation de feuilles composites, **caractérisé en ce qu'**on applique une dispersion suivant l'une des revendications 1 à 4, sur une feuille de substance synthétique ou une feuille métallique et **en ce qu'**on effectue un collage avec une ou plusieurs feuilles de substance synthétique et/ou métalliques pour former une feuille composite.

**6.** Procédé de préparation de feuilles composites suivant la revendication 5, **caractérisé en ce qu'**on applique une dispersion suivant l'une des revendications 1 à 4 sur une feuille de substance synthétique ou une feuille métallique et **en ce qu'**on effectue un collage avec une ou plusieurs feuilles de substance synthétique et/ou métalliques pour former une feuille composite, une des feuilles étant une feuille de polyoléfine.

**7.** Feuilles composites, que l'on peut obtenir selon le procédé suivant l'une des revendications 5 et 6.